# EUROPÄISCHE PATENTSCHRIFT

(11) **EP 2 331 601 B1**
(45) Veröffentlichungstag und Bekanntmachung des Hinweises auf die Patenterteilung: **12.02.2014**
(21) Anmeldenummer: 09782098.9
(22) Anmeldetag: 24.08.2009
(51) Int. Cl.: C08G 63/08, C08G 63/12, C08G 63/66, C09D 167/00, C09J 167/00, C08G 18/32, C09D 175/04, C09J 175/04, C08G 69/02

(54) **VERWENDUNG VON SUBSTITUIERTEN 2-ARYL-2-ALKYL-1,3-PROPANDIOLEN ODER SUBSTITUIERTEN 2-CYCLOHEXYL-2-ALKYL-1,3-PROPANDIOLEN ZUR HERSTELLUNG VON POLYMEREN**
USE OF SUBSTITUTED 2-ARYL-2-ALKYL-1,3-PROPANEDIOL OR SUBSTITUTED 2-CYCLOHEXYL-2-ALKYL-1,3-PROPANEDIOL FOR THE PREPARATION OF POLYMERS.
UTILISATION DE 2-ARYL-2-ALKYL-1,3-PROPANEDIOL SUBSTITUÉS OU DE 2-CYCLOHEXYL-2-ALKYL-1,3-PROPANEDIOL SUBSTITUÉS POUR LA PRÉPARATION OF POLYMÈRES.

(30) Priorität: 04.09.2008 EP 08163682
(43) Veröffentlichungstag der Anmeldung: 15.06.2011
(73) Patentinhaber: BASF SE, 67056 Ludwigshafen (DE)
(72) Erfinder: MIJOLOVIC, Darijo, 68309 Mannheim (DE); GARNIER, Sebastien, 69469 Weinheim (DE); MIAO, Qiang, 68199 Mannheim (DE); GUIXA GUARDIA, Maria, 68163 Mannheim (DE); TEBBEN, Gerd-Dieter, 68239 Mannheim (DE)
(86) Internationale Anmeldenummer: PCT/EP2009/060851
(87) Internationale Veröffentlichungsnummer: WO 2010/026066

(56) Entgegenhaltungen:
- EP-A2- 0 302 516
- WO-A1-99/30903
- WO-A1-2004/056902
- WO-A2-02/24823
- GB-A- 2 423 770
- US-A- 3 498 952
- US-A- 4 490 300
- US-A- 5 817 733
- US-B1- 6 391 936
- US-B1- 6 555 612
- MATSUO JYUHOU; AOKI KAZUTAKA; SANDA FUMIO; ENDO TAKESHI: "Substituent effect on the anionic equilibrium polymerization of six-membered cyclic carbonates" MACROMOLECULES, Bd. 31, Nr. 14, 14. Juli 1998 (1998-07-14) , Seiten 4432-4438, XP002550253

## Beschreibung

Die Erfindung betrifft einen Polyester, erhältlich durch Umsetzung trifuktioneller Alkohole mit Dicarbonsäuren oder Polycarbonsäuren als Aufbaukomponente und monomeren Verbindungen, wobei als monomere Verbindung
substituierte 2-Aryl-2-alkyl-1,3-propandiole der Formel I oder substituierte 2-Cyclohexyl-2-alkyl-1,3-propandiole der Formel Ia 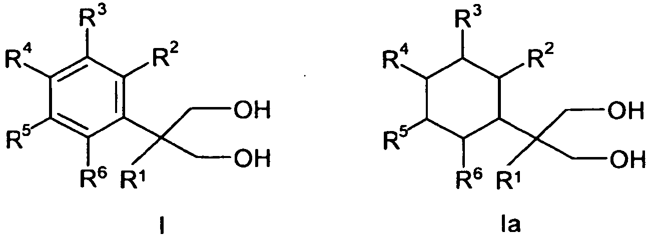 oder die alkoxylierten Derivate der Verbindungen der Formel I und Ia mitverwendet werden.

Diole werden für die Herstellung von Polymeren, z.B. Polyestern oder Polyurethanen, benötigt. In Ullmanns Encyclopedia of Industrial Chemistry "Alcohols, Polyhydric" von Peter Werle et al. Seite 4-6 wird der Einsatz von Neopentylglycol beschrieben.

In EP-A 562 578 wird z. B. die Verwendung verschiedener Cyclohexandiole wie 1,4-Cyclohexandimethanol oder 1,4-Cyclohexandiethanol zur Herstellung von Polyestern beschrieben.

Die Verwendung von 2-Pentyl-2-propyl-1,3 propandiol für die Herstellung von Polyestern ist aus JP HEI 03-161452 bekannt.

DE-A 1009915 beschreibt die Herstellung von 2-Methyl-2-phenyl-1,3-propandiol mittels Cannizzaro-Reaktion. Auch in BE-A 629257 wird die Synthese von 2-Cyclohexyl-2-methyl-1,3-propandiol durch eine Cannizzaro-Reaktion beschrieben. In keinem dieser Schutzrechte wird jedoch die Verwendung von 2-Cyclohexyl-2-methyl-1,3-propandiol oder 2-Methyl-2-phenyl-1,3-propandiol zur Herstellung von Polymeren beschrieben.

Die 1,3-Propandiole können aber auch alternativ durch Aldolreaktion, wie in WO 01/51438, WO 97/17313 oder WO 98/29374 beschrieben, der entsprechenden Carbaldehyde mit Formaldehyd und anschließende Hydrierung, wie es in EP-A 44412 oder EP-A 44444 beschrieben ist, der entstandenen 2-Hydroxymethylaldehyde erhalten werden.
Alternativ können die Verbindungen der Formel Ia auch durch Hydrierung der Verbindungen der Formel I hergestellt werden.

Grundsätzlich ist gewünscht, die anwendungstechnischen Eigenschaften von Polymeren bei ihren unterschiedlichen Verwendungen zu verbessern.

Bei einer Verwendung der Polymeren als Bindemittel in Beschichtungsmassen, Klebstoffen oder Dichtungsmassen ist insbesondere die Glassübergangstemperatur von Bedeutung. Die hergestellten Beschichtungen sollen für Lackanwendungen gute mechanische Eigenschaften, wie Schlagzähigkeit und Elastizität, eine hohe Kratz- und Stoßfestigkeit, gute Beständigkeiten gegen Wasser, Lösemittel, Fett und Chemikalien haben, sowie einen hohen Glanz aufweisen.

Aufgabe der vorliegenden Erfindung war, derartige Polymere zur Verfügung zu stellen.

Diese Aufgabe wird gelöst durch einen Polyester, erhältlich durch Umsetzung trifuktioneller Alkohole mit Dicarbonsäuren oder Polycarbonsäuren als Aufbaukomponente und monomeren Verbindungen, dadurch gekennzeichnet, dass als monomere Verbindung
substituierte 2-Aryl-2-alkyl-1,3-propandiole der Formel I oder substituierte 2-Cyclohexyl-2-alkyl-1,3-propandiole der Formel Ia 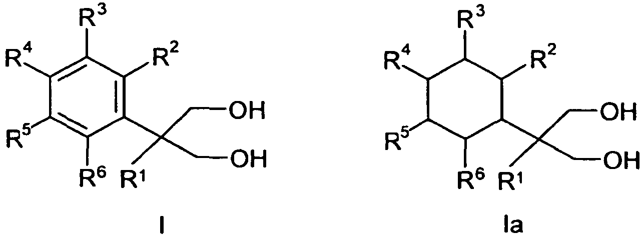 oder die alkoxylierten Derivate der Verbindungen der Formel I und Ia eingesetzt werden, wobei
R¹ eine lineare oder verzweigte Alkylgruppe mit 1 bis 10 C-Atomen darstellt und R² bis R⁶ unabhängig voneinander ausgewählt sind aus der Gruppe von Wasserstoff, Methyl-, Ethyl-, Propyl-, iso-Propyl-, n-Butyl-, tert.-Butyl-.

Vorteilhaft ist der erfindungsgemäße Polyester dadurch gekennzeichnet, dass als monomere Verbindung oder dessen alkoxylierte Derivate der Formel I oder der Formel la solche eingesetzt werden, bei denen R¹ lineare Alkylgruppen mit 1 bis 4 C-Atomen darstellt und R² bis R⁶ Wasserstoff ist.

Vorteilhaft ist das erfindungsgemäße Polymer dadurch gekennzeichnet, dass die Verbindungen der Formel I oder der Formel Ia durch Umsetzung von Aldehyden der Formel II oder der Formel IIa 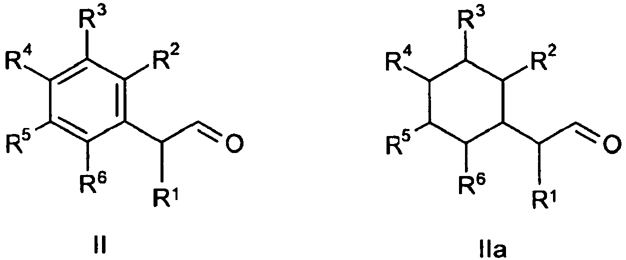 wobei R¹ bis R⁶ die vorhergehende Bedeutung haben, mit Formaldehyd in einer Aldol-Cannizzaro-Reaktion oder in einer Aldolkondensation mit anschließender Hydrierung erhältlich sind.

Vorteilhaft ist der erfindungsgemäße Polyester dadurch gekennzeichnet, dass die Verbindungen der Formel Ia durch Hydrierung von entsprechenden, gleichsubstituierten Verbindungen der Formel I, wobei R¹ und R² bis R⁶ die vorhergehende Bedeutung haben, erhältlich sind.

Vorteilhaft ist der erfindungsgemäße Polyester dadurch gekennzeichnet, dass es sich um ein Polycarbonatdiol (erhältlich durch Umsetzung von Dialkylcarbonaten oder cyclischen Carbonaten mit Diolen unter Abspaltung von Alkohol) handelt.

Vorteilhaft ist der erfindungsgemäße Polyester dadurch gekennzeichnet, dass es-sich um ein Polyaddukt handelt, welches durch ringöffnende Polymerisation von Lactonen erhältlich ist.

Ein weiterer Gegenstand der Erfindung ist die Verwendung des erfindungsgemäßen Polyesters zur Herstellung einer thermoplastischen Zusammensetzung.

Ein weiterer Gegenstand der Erfindung sind thermoplastische Zusammensetzungen, enthaltend ein erfindungsgemäßen Polyester und/oder Wiederholungseinheiten eines erfindungsgemäßen Polyesters.
Ein weiterer Gegenstand der Erfindung ist die Verwendung der erfindungsgemäßen thermoplastischen Zusammensetzungen zur Herstellung von Formkörpern.

Ein weiterer Gegenstand der Erfindung ist die Verwendung des erfindungsgemäßen Polyesters zur Herstellung von Beschichtungsmassen, Dichtungsmassen oder Klebstoffen.

Ein weiterer Gegenstand der Erfindung sind Beschichtungsmassen, Dichtungsmassen oder Klebstoffe, enthaltend Wiederholungseinheiten eines erfindungsgemäßen Polyesters.

Vorteilhaft handelt es sich bei den erfindungsgemäßen Beschichtungsmassen, Dichtungsmassen oder Klebstoffen um wässrige Massen.

Ein weiterer Gegenstand der Erfindung ist die Verwendung des erfindungsgemäßen Polyesters zur Herstellung von Pulverlacken.

Ein weiterer Gegenstand der Erfindung ist ein Pulverlack enthaltend Wiederholungseinheiten eines erfindungsgemäßen Polyesters.

Ein weiterer Gegenstand der Erfindung ist die Verwendung des erfindungsgemäßen Polyesters zur Herstellung von strahlungshärtbaren Beschichtungsmassen.

Ein weiterer Gegenstand der Erfindung sind strahlungshärtbare Beschichtungsmassen, enthaltend Wiederholungseinheiten eines erfindungsgemäßen Polyesters.

Zur Herstellung der erfindungsgemäßen Polyester werden Verbindungen der Formel I oder der Formel Ia oder die alkoxylierte Derivate der Formel I oder der Formel Ia eingesetzt, bei denen R¹ eine lineare oder verzweigte Alkylkette mit 1 bis 10 C-Atomen darstellt und R² bis R⁶ unabhängig voneinander ausgewählt ist aus der Gruppe von Wasserstoff, Methyl-, Ethyl-, Propyl-, iso-Propyl-, n-Butyl-, tert.-Butyl-. Besonders bevorzugt ist R¹ eine lineare Alkylgruppe mit 1 bis 4 C-Atomen, ganz besonders bevorzugt ist R¹ eine Methyl-Gruppe. Besonders bevorzugt steht R² bis R⁶ für Wasserstoff. Besonders bevorzugte Verbindungen der Formel I und Ia sind 2-Methyl-2-phenyl-1,3-propandiol und 2-Cyclohexyl-2-methyl-1,3-propandiol.

Die alkoxylierten Derivate der Verbindung der allgemeinen Formel I oder der Formel Ia sind Produkte der Umsetzung mit einem oder einem Gemisch aus Alkylenoxiden. Beispiele für Alkylenoxide sind Ethylen-, Propylen-, n-Butylen-, iso-Butylen-, Styrol- oder Cyclohexenoxid. Insbesondere sind die vorstehenden Diole ethoxy- und propoxyliert. Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 20, insbesondere 0 bis 10, d.h. 1 mol Hydroxylgruppe kann vorzugsweise mit bis zu 20 mol, insbesondere 10 mol Alkylenoxiden alkoxyliert sein.

In einer bevorzugten Ausführungsform sind die Verbindungen der Formel I oder der Formel Ia nicht alkoxyliert.

Die Verbindungen der Formel I oder der Formel Ia werden durch eine Cannizzaro-Reaktion der entsprechenden Aldehyde der Formel II oder Formel IIa mit Formaldehyd erhalten. Das Verfahren zur Herstellung von 2-Phenyl-2-methyl-1,3-propandiol und 2-Cyclohexyl-2-methyl-1,3-propandiol ist bereits in DE-A 1009915 und BE-A 629257 vorbeschrieben. Weiterhin können Verbindungen der Formel I oder Formel Ia durch Aldolreaktion der entsprechenden Aldehyde der Formel II oder der Formel IIa mit Formaldehyd gefolgt einer Hydrierung erhalten werden. Die Aldolreaktion ist beispielsweise in WO 01/51438, WO 97/17313 oder WO 98/29374 beschrieben. Die Hydrierung kann analog der Offenbarung von EP-A 44412 oder EP-A 44444 durchgeführt werden.

Alternativ zu diesen Verfahren kann auch die Verbindung der Formel IIa durch Hydrierung der Verbindung der Formel II hergestellt werden.

Alternativ zu diesen Verfahren kann die Verbindung Ia durch Hydrierung der Verbindung der Formel I hergestellt werden, wobei die Verbindung I nach einem der obigen Verfahren hergestellt werden kann.

### Zu den Polyestern

Die Polyester sind erhältlich durch Polykondensation oder Polyadduktbildung von monomeren Verbindungen unter Mitverwendung einer oder mehrerer Verbindungen der Formel I oder der Formel Ia; die Polyester können, wenn gewünscht, durch andere oder weitere Umsetzungen chemisch modifiziert, z.B. funktionalisiert oder vernetzt werden.

Bei einer Polykondensation von monomeren Verbindungen kommt es zu einer Abspaltung von Wasser oder Alkohol, bei einer Polyadduktbildung kommt es zu keiner Abspaltung.

Bevorzugte Polykondensate sind Polyester, welche durch Umsetzung von Di- oder Polyolen mit Di- oder Polycarbonsäuren, welche auch in Form reaktiver Derivate, wie Anhydride oder Ester eingesetzt werden können, erhältlich sind.
Unter dem Begriff Polyester soll im Folgenden ein Polymer verstanden werden, welches zu mehr als 50 Gew.-%, besonders bevorzugt zu mehr als 70 Gew.-% und insbesondere zu mehr als 90 Gew.-% aus Aufbaukomponenten, ausgewählt aus Diolen, Polyolen, Dicarbonsäuren und Polycarbonsäuren, besteht.

Genannt seien auch Polycarbonatdiole, welche durch Umsetzung von Dialkylcarbonaten oder cyclischen Carbonaten mit Diolen unter Abspaltung von Alkoholen erhältlich sind.
In Betracht kommen z.B. auch Polyaddukte, die durch ringöffnende Polymerisation von Lactonen erhältlich sind.

All diesen Polyestern ist gemeinsam, dass sie im Wesentlichen aus Diolen und mit diesen Diolen reaktiven Verbindungen, wie Di- bzw. Polycarbonsäuren aufgebaut sind.

Die erfindungsgemäßen Polyester haben vorzugsweise den nachstehenden Gehalt der Monomerbausteine der Verbindungen der Formel I oder der Formel Ia oder dessen alkoxylierten Derivaten. Die nachstehenden Gewichtsangaben zum Gehalt der Verbindungen der Formel I oder der Formel Ia oder dessen alkoxylierten Derivaten im Polyester beziehen sich dabei auf die Einheiten des Polyesters, die sich von Verbindungen der Formel I oder der Formel Ia oder deren alkoxylierten Verbindungen ableiten. Bei Polyaddukten entspricht das Gewicht dieser Einheiten unverändert der Verbindung der Formel I oder der Formel Ia oder deren alkoxylierten Derivaten, bei Polykondensaten ist das Gewicht dieser Einheiten um die Wasserstoffatome der Hydroxylgruppen vermindert.

Bevorzugte Polyester bestehen mindestens zu 0,5 besonders bevorzugt mindestens zu 2, ganz besonders bevorzugt zu mindestens 5 und insbesondere zu mindestens 10 Gew.- % und in einer besonderen Ausführungsform zu mindestens 20 Gew.-% aus Verbindungen der Formel I oder der Formel Ia oder deren alkoxylierten Derivaten. Da die Mitverwendung von anderen, mit den Diolen reaktiven Verbindungen zwingend ist, bestehen die Polyestern im Allgemeinen zu nicht mehr als 90 Gew.-% insbesondere zu nicht mehr als 60 Gew.-% bzw. zu nicht mehr als 50 Gew.-% aus den Verbindungen. der Formel I oder der Formel Ia oder deren alkoxylierten Derivaten.
Neben den Verbindungen der Formel I oder der Formel Ia oder deren alkoxylierten Derivaten und den trifuktionellen Alkoholen können die Polyester auch andere Diole oder Polyole als Aufbaukomponenten enthalten. In einer bevorzugten Ausführungsform handelt es sich bei mindestens 10 Gew.-%, besonders bevorzugt bei mindestens 25 Gew.-% und ganz besonders bevorzugt bei mindestens 50 Gew.-% der Diole und Polyole, aus denen die Polymere bestehen, um die Verbindungen der Formel I oder der Formel Ia oder deren alkoxylierten Derivaten.

Insbesondere kann es sich bei mindestens 70 Gew.-% bzw. mindestens 90 Gew.-% der Diole und Polyole, aus denen die Polyester bestehen, um die Verbindungen der Formel I oder der Formel Ia oder deren alkoxylierten Derivaten handeln.

### Zu weiteren Bestandteilen der Polyester

Polyester können neben den Verbindungen der Formel I oder deren alkoxylierten Derivaten und den trifuktionellen Alkoholen weitere Diole oder Polyole als Aufbaukomponenten enthalten.

Als weitere Diole seien z.B. Ethylenglykol, Propylenglykol und deren höher kondensierte Vertreter, z.B. wie Diethylenglykol, Triethylenglykol, Dipropylenglykol, Tripropylenglykol etc., 2-Methyl-1,3-propandiol, Butandiole, Pentandiole, Hexandiole, Neopentylglykol, alkoxylierte phenolische Verbindungen, wie ethoxylierte bzw. propoxylierte Bisphenole, Cyclohexandimethanol genannt. Als weitere geeignete Polyole sind höherfunktionelle Alkohole, wie Pentaerythrit, Ditrimethylolpropan, Dipentaerythrit, Sorbit, Mannit genannt.

Bevorzugte Mischungen der Verbindungen der Formel I oder der Formel Ia mit einem Diol und einem Triol sind Mischungen von 2-Methyl-2-phenyl-1,3-propandiol oder 2-Cyclohexyl-2-methyl-1,3-propandiol mit Neopentylglykol und Trimethylolpropan.

Die vorstehenden Diole oder Polyole können alkoxyliert, insbesondere ethoxy- und propoxyliert sein. Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 20, d.h. 1 mol Hydroxylgruppe kann vorzugsweise mit bis zu 20 mol Alkylenoxiden alkoxyliert sein.

Die Polyester enthalten weiterhin Dicarbonsäuren oder Polycarbonsäuren als Aufbaukomponenten. Dicarbonsäuren oder Polycarbonsäuren können bei der Herstellung der Polyester auch in Form ihrer reaktiven Derivate, z.B. als Anhydride oder Ester eingesetzt werden. Geeignete Dicarbonsäuren sind Bernsteinsäure, Glutarsäure, Adipinsäure, Sebacinsäure, Isophthalsäure, Terephthalsäure, deren Isomere und Hydrierungsprodukte, wie Tetrahydrophthalsäure. In Betracht kommen auch Maleinsäure und Fumarsäure für ungesättigte Polyester.
Polyester können auch Monoalkohole oder Monocarbonsäuren als Bestandteil enthalten; durch Mitverwendung derartiger Verbindungen kann das Molekulargewicht eingestellt, bzw. begrenzt werden.

Um besondere Eigenschaften zu erreichen, können die Polyester besondere funktionelle Gruppen enthalten. Wasserlösliche oder wasserdispergierbare Polyester enthalten die notwendige Menge an hydrophilen Gruppen, z.B. Carboxylgruppen oder Carboxylatgruppen um eine Wasserlöslichkeit oder Wasserdispergierbarkeit zu erreichen. Vernetzbare Polyester, z.B. für Pulverlacke, enthalten funktionelle Gruppen, welche mit dem verwendeten Vernetzungsmittel eine Vernetzungsreaktion eingehen. Es kann sich dabei ebenfalls um Carbonsäuregruppen handeln, wenn eine Vernetzung mit Hydroxylgruppen enthaltenden Verbindungen, z.B. Hydroxyalkylamiden beabsichtigt ist. Bei den funktionellen Gruppen kann es sich auch um ethylenisch ungesättigte Gruppen, z.B. durch Modifizierung des Polyesters mit ungesättigten Dicarbonsäuren (Maleinsäure) oder Umsetzung mit (Meth)acrylsäure, handeln. Derartige Polyester sind thermisch oder chemisch vernetzbar oder strahlungshärtbar.

Ungesättigte Polyester können auch mit einfach oder auch mehrfach ethylenisch ungesättigten, radikalisch polymerisierbaren Verbindungen, wie Styrol, C₁-C₁₀ Alkylacrylaten, Dialkylacrylaten, z. B. das Diacrylat von Ethandiol oder Butandiol copolymerisiert werden. Der ungesättigte Polyester kann dazu im Gemisch mit den ethylenisch ungesättigten Monomeren verwendet werden, wie z. B. in WO 00/23495 und EP 1131372 beschrieben ist. Die vorstehenden ethylenisch ungesättigten Verbindungen dienen dabei gleichzeitig als Lösemittel (Reaktivverdünner), so dass das Gemisch vorzugsweise als Lösung der Polyester in diesen Verbindungen vorliegt. Das Gemisch kann z.B. als Beschichtungs - oder Imprägnierungsmittel, insbesondere auch zur Herstellung von Laminaten verwendet werden. Die Härtung kann thermisch oder photochemisch, in beiden Fällen gegebenenfalls auch unter Zusatz eines Initiators erfolgen. Solche Verbindungen, die sich chemisch, thermisch oder durch UV-Bestrahlung aushärten lassen werden auch Thermoset genannt.

Insbesondere können die Polyester vernetzende Gruppen enthalten, die, sobald die notwendigen Bedingungen vorliegen, eine Vernetzungsreaktion eingehen. Die Polyester können insbesondere auch im Gemisch mit Vernetzern verwendet werden, die zum gewünschten Zeitpunkt unter den notwendigen Bedingungen (insbesondere bei erhöhter Temperatur) eine Vernetzungsreaktion mit dem Polyester eingehen, wobei Thermosets gebildet werden.

Nach der Reaktivität der Vernetzer unterscheidet man zwischen einkomponentigen (1 K-) und zweikomponentigen (2K-) Systemen. Bei 2K-systemen wird der Vernetzer erst kurz vor der späteren Verwendung zugegeben, bei 1 K-Systemen kann der Vernetzer frühzeitig zum System gegeben werden (latenter Vernetzer), die Vernetzung tritt erst bei den später eingestellten Bedingungen auf, z.B. bei der Entfernung von Lösemittel und/oder Temperaturerhöhung.

Übliche Vernetzer sind z.B. Isocyanate, Epoxide, Säureanhydride oder bei Polyesters mit radikalisch polymersierbaren ethylenisch ungesättigten Gruppen, auch ethylenisch ungesättigte Monomere wie Styrol.

### Zur Verwendung der Polyester

Die Polyester eignen sich als Bestandteil von thermoplastischen Zusammensetzungen. Die. Polyester haben dazu vorzugsweise ein ausreichend hohes Molekulargewicht, damit sie thermoplastische Eigenschaften haben.

Thermoplastische Zusammensetzungen werden im Allgemeinen zur Herstellung von Formkörpern verwendet, wobei übliche Verfahren wie Spritzguss, Extrusion oder Blasformen zur Anwendung kommen können.

Insbesondere eignen sich die Polyester als Bestandteil von Beschichtungsmassen, Dichtungsmassen oder Klebstoffen.

Die Beschichtungsmassen, Dichtungsmassen oder Klebstoffe enthalten die erfindungsgemäßen Polyester vorzugsweise als Bindemittel. Sie können weitere Bindemittel und sonstige Additive, z.B. Antioxidantien, Stabilisatoren, Farbstoffe, Pigmente, Verlaufshilfsmittel, Verdicker oder Benetzungshilfsmittel enthalten.

Bei den Beschichtungsmassen, Dichtungsmassen oder Klebstoffe kann es sich um wässrige oder lösemittelhaltige Massen handeln. Bevorzugt sind wässrige Massen. Derartige Massen enthalten die erfindungsgemäßen Bindemittel vorzugsweise in Form von Lösungen oder Dispersionen in Wasser oder organischen Lösemitteln oder deren Gemische. Soweit erforderlich, enthalten die Polyester zusätzliche funktionelle Gruppen, die eine Löslichkeit oder Dispergierbarkeit in Wasser oder organischen Lösemitteln, bevorzugt in Wasser, bewirken (siehe oben).

Bei den Beschichtungsmassen, Dichtungsmassen oder Klebstoffe kann es sich auch um Massen handeln, die weitgehend frei sind von Wasser oder organischen Lösemitteln (sogenannte 100 % Systeme). Derartige Massen enthalten im Allgemeinen weniger als 10 Gew.-Teile Wasser oder sonstige organische Lösemittel (Siedepunkt kleiner 150°C, bei 1 bar), auf 100 Gew.-Teile der Massen. Besonders bevorzugt enthalten sie weniger als 2 Gew.-Teile, ganz besonders bevorzugt weniger als 1 Gew. Teil, bzw. weniger als 0,5 Gew.-Teile Wasser oder sonstige organische Lösemittel (Siedepunkt kleiner 150°C, bei 1 bar), auf 100 Gew.-Teile der Massen.

Es kann sich dabei Massen handeln, welche bei Raumtemperatur noch fließfähig sind oder um Massen, welche z.B. als Pulver vorliegen und erst bei erhöhten Temperaturen verarbeitet werden.

Die Massen, insbesondere Beschichtungsmassen, können strahlungshärtbar sein bzw. als strahlungshärtbare Massen bzw. Beschichtungsmassen verwendet werden, die als Thermosets bezeichnet werden. Vorzugsweise enthalten sie dazu einen strahlungshärtbaren Polyester (siehe oben). Die Strahlungshärtung kann mit energiereicher Strahlung, z.B. Elektronenstrahlung oder UV Licht erfolgen; bei Verwendung von UV Licht kann den Polyester vorzugsweise ein Photoinitiator zugesetzt werden.

Eine bevorzugte Verwendung im Rahmen der vorliegenden Erfindung ist die Verwendung der erfindungsgemäßen Polyester als oder in Pulverlacken. Vorzugsweise werden Polyester als Pulverlack verwendet, welcher vernetzbar ist.
In einer bevorzugten Ausführungsform wird der Pulverlack durch Mischen und Aufschmelzen des Polyesters, Vernetzers und weiterer Additive, z.B. Pigmente und Verlaufsmittel bei hohen Temperaturen hergestellt. Das Gemisch kann durch anschließende Extrusion und entsprechende Verarbeitung des Extrudats in Pulverform gebracht werden.

Der Pulverlack kann in üblicher Weise, z.B. auch elektrostatisch, auf die gewünschten Substrate; z.B. solche mit Metall-, Kunststoff- oder Holzoberflächen, beschichtet werden.

Die erfindungsgemäßen Polyester haben eine erhöhte Glasübergangstemperatur. Des Weiteren weisen sie eine sehr gute Hydrolysebeständigkeit auf.

Die erfindungsgemäßen Polyester bewirken bei ihrer Verwendung in Beschichtungsmassen, Dichtungsmassen und Klebstoffen gute mechanische Eigenschaften; insbesondere die Beschichtungsmassen, z.B. Pulverlacke; haben eine hohe Schlagzähigkeit, gute Elastizität und einen guten Glanz.

### Beispiele

### Abkürzungen

- ADS:: Adipinsäure
- CHMPD:: 2-Cyclohexyl-2-methyl-1,3-propandiol
- D:: Polydispersitätsindex (M_{w}/Mₙ)
- DPG:: Dipropylenglykol
- DBZO:: Dibutylzinnoxid
- DSC:: Differential-Scanning-Calorimetry
- GPC:: Gelpermeationschromatographie
- IPS:: Isophthalsäure
- Mₙ:: zahlenmittleres Molekulargewicht in [g/mol]
- M_{w}:: gewichtsmittleres Molekulargewicht in [g/mol]
- MPPD:: 2-Methyl-2-phenyl-1,3-propandiol
- nFA:: nicht-flüchtige Anteile
- NPG:: Neopentylglykol
- OHZ:: OH-Zahl
- SZ:: Säurezahl
- T_{g}:: Glasübergangstemperatur
- TMP:: Trimethylolpropan
- TMSA:: Trimellithsäureanhydrid
- TPS:: Terephthalsäure
- η₁:: Schmelzviskosität
- η₂:: Lösungsviskosität

### Polymercharakterisierungsmethoden

Die Molekulargewichtsbestimmungen werden mit GPC durchgeführt. Stationäre Phase: hochvernetztes poröses Polystyrol-Divinylbenzol, kommerziell erhältlich als PL-GEL von Fa. Polymer Laboratories. Laufmittel: THF. Fluss: 0,3 ml/min. Kalibrierung mit Polyethylenglykol 28700 bis 194 Dalton der Fa. PSS.
Die Säurezahl der Polyester wird nach der DIN-Norm-Methode 53169 bestimmt.
Die Bestimmung der Schmelzviskosität η₁ der Polyester wird mit einem Kegel-Platte-Viskosimeter bei 160 °C im Oszillationsmodus und mit einer Winkelgeschwindigkeit von 0,1 rad/s durchgeführt. Die Bestimmung der Lösungsviskosität η₂ der Polyester wird mit einem Kegel-Platte-Viskosimeter bei Raumtemperatur im Rotationsmodus durchgeführt. Die Lösungen bestehen aus 70% Polyester und 30% Lösemittel auf der Basis von Alkylbenzolen / Methylpropylenglykol (5:1)(Mischung Solvesso 100™ / Solvenon PM™ 5/1).
Die Tg der Polyester wird mittels DSC nach ASTM D3418 bestimmt.

### HERSTELLUNG PULVERPOLYESTER MIT COOH-GRUPPEN

### Polyester P1

### Stufe I - Herstellung des OH-Gruppen-haltigen Oligomers

121,3 g MPPD (0,73 mol), 253,5 g NPG (2,44 mol), 14,1 g TMP (0,11 mol), 424,6 g TPS (2,56 mol), und 0,4 g Katalysator DBZO werden in einem mit Thermometer, Schutzgaseinleitung, Rührer und Rückflusskühler ausgerüsteten 2L-Vierhalskolben vorgelegt. Unter Durchleiten eines Stickstoffstromes und unter Rückfluss wird die Reaktantenmischung auf 180°C zügig aufgeheizt. Wasser wird kontinuierlich abdestilliert. Anschließend wird das Reaktionsgemisch stufenweise auf 230°C innerhalb von 3 bis 5 h unter Rühren und Stickstofffluss aufgeheizt, und bei 230°C weitergerührt, bis das Oligomer eine SZ von 10 bis 15 mg KOH/g aufweist. Die SZ des Oligomers beträgt 12 mg KOH/g.

### Stufe II - Herstellung des COOH-Gruppen-haltigen Polymers P1

Das oben synthetisierte Oligomer wird auf 180°C abgekühlt, bevor 182,0 g IPS (1,10 mol) zugegeben werden. Die Temperatur wird auf 230°C erhöht, und es wird unter diesen Bedingungen weiterkondensiert, bis das Polymer eine SZ von 50 ± 4 mg KOH/g aufweist. Das aus der Polymerisation entstehende Wasser kann am Ende der Reaktion durch schwaches Vakuum gezogen werden, um die erwünschte SZ zu erreichen. Man erhält einen verzweigten COOH-Gruppen-haltigen Pulverpolyester P1, dessen SZ 46 mg KOH/g beträgt. P1 weist eine Glasüberganstemperatur Tg von 80°C und eine Schmelzviskosität η₁ von 89,8 Pa*s bei 160°C auf. Die GPC-Analyse liefert folgende Werte: Mₙ= 2010 g/mol; D = 3,8 (siehe Tabelle 1).

### Polyester P2 bis P5

Es wird wie bei der Herstellung von P1 verfahren, mit den in Tabelle 1 zusammengefassten Zusammensetzungen. Man erhält verzweigte COOH-Gruppen-haltige Pulverpolyester, deren Kenndaten SZ, Mₙ, D, Tg und η₁ in Tabelle 1 aufgelistet sind.
- P2: Beispiel 2
- P3: Vergleichsbeispiel 3
- P4: Beispiel 4
- P5: Vergleichsbeispiel 5

**Tabelle 1**

| | Zusammensetzung | | | | | | Polyesterkenndaten | | | | |
|---|---|---|---|---|---|---|---|---|---|---|---|
| Polyester | MPPD [g] | CHMPD [g] | NPG [g] | TMP [g] | TPS [g] | IPS [g] | SZ [mg KOH/g] | Mn [g/mol] | D | T_{g} [°C] | η₁ [Pa.s] |
| P1 | 121,3 | 0 | 253,5 | 14,1 | 424,6 | 182,0 | 46 | 2010 | 3,8 | 80 | 90 |
| P2 | 0 | 125,1 | 252,2 | 14,1 | 422,4 | 181,0 | 52 | 2110 | 5,2 | 80 | 106 |
| P3 | 0 | 0 | 396,0 | 17,0 | 510,3 | 218,7 | 49 | 2100 | 2,8 | 73 | 39 |
| P4 | 137,0 | 0 | 300,9 | 13,8 | 479,9 | 205,7 | 37 | 2550 | 3,6 | 80 | 140 |
| P5 | 0 | 0 | 407,9 | 14,6 | 506,1 | 216,9 | 38 | 2400 | 3,2 | 73 | 54 |

Die erfindungsgemäßen Polymere P1, P2 und P4 haben eine deutlich höhere Glasübergangstemperatur als die entsprechenden Vergleichspolymere P3 und P5, was einen Vorteil für Pulverlack darstellt.

### HERSTELLUNG AMORPHER POLYESTER MIT OH-GRUPPEN

### Polyester P6

139,3 g MPPD (0,84 mol), 138,5 g NPG (1,33 mol), 112,5 g TMP (0,84 mol), 325,1 g IPS (1,96 mol), 122,5 g ADS (0,84 mol) und 0,4 g Katalysator DBZO werden in einem mit Thermometer, Schutzgaseinleitung, Rührer und Rückflusskühler ausgerüsteten 2L-Vierhalskolben vorgelegt. Unter Durchleiten eines Stickstoffstromes und unter Rückfluss wird die Reaktantenmischung auf 160°C zügig aufgeheizt. Wasser wird kontinuierlich abdestilliert. Anschließend wird das Reaktionsgemisch stufenweise auf 230°C innerhalb von 3 bis 5 h unter Rühren und Stickstofffluss aufgeheizt, und bei 230°C weitergerührt, bis der Polyester P6 eine SZ von 10 bis 15 mg KOH/g aufweist. Man erhält einen verzweigten amorphen OH-Gruppen-haltigen Polyester P6, dessen SZ 14 mg KOH/g beträgt. P6 weist eine OHZ von 97 mg KOH/g und eine Glasüberganstemperatur T_{g} von 30°C auf. Die GPC-Analyse liefert folgende Werte: Mₙ= 1892 g/mol; D = 14,7. P6 weist eine Schmelzviskosität η₁ von 5,2 Pa*s bei 160°C auf. Die Lösungsviskosität η₂ des Polyesters P6 bei Raumtemperatur (P6-Lösung mit 70 % nFA und einer Mischung Solvesso 100™ / Solvenon PM™ 5/1 als Lösemittel) beträgt 48,6 Pa*s (siehe Tabelle 2).

### Polyester P7 und P8

Es wird wie bei der Herstellung von P6 verfahren, mit der in Tabelle 2 zusammengefassten Zusammensetzung. Die Kenndaten der Polyester P7 und P8 sind in der Tabelle 2 aufgelistet.
- P7: Beispiel 7
- P8: Vergleichsbeispiel 8

**Tabelle 2**

| | Zusammensetzung | | | | | | Polyesterkenndaten | | | | | | |
|---|---|---|---|---|---|---|---|---|---|---|---|---|---|
| Polyester | MPPD [g] | CHMPD [g] | NPG [g] | TMP [g] | IPS [g] | ADS [g] | SZ [mg KOH/g] | OHZ [mg KOH/g] | Mₙ [g/mol] | D | T_{g} [°C] | η₁ [Pa.s] | η₂ [Pa.s] |
| P6 | 139,3 | 0 | 138,5 | 112,5 | 325,1 | 122,5 | 14 | 97 | 1892 | 14,7 | 30 | 5,2 | 48,6 |
| P7 | 0 | 193,8 | 185,9 9 | 150,9 | 436,3 | 164,5 | 14 | 99 | 1978 | 17,0 | 32 | 3,1 | 23,5 |
| P8 | 0 | 0 | 326,6 | 163,9 | 473,9 | 178,6 | 15 | 108 | 2195 | 16,8 | 25 | 6,3 | 41,6 |

### HERSTELLUNG WASSERVERDÜNNBARER POLYESTER

### Polyester P9

### Stufe I - Herstellung des OH-Gruppen-haltigen Oligomers

220,7 g MPPD (1,33 mol), 311,1 g NPG (2,99 mol), 413,8 g IPS (2,49 mol) und 0,6 g Katalysator DBZO werden in einem mit Thermometer, Schutzgaseinleitung, Rührer und Rückflusskühler ausgerüsteten 2L-Vierhalskolben vorgelegt. Unter Durchleiten eines Stickstoffstromes und unter Rückfluss wird die Reaktantenmischung auf 160°C zügig aufgeheizt. Wasser wird kontinuierlich abdestilliert. Anschließend wird das Reaktionsgemisch stufenweise auf 220°C innerhalb von 3 bis 5 h unter Rühren und Stickstofffluss aufgeheizt, und bei 220°C weitergerührt, bis das Reaktionsgemisch eine SZ von 10 bis 15 mg KOH/g aufweist. Die SZ des Oligomers beträgt 12 mg KOH/g.

### Stufe II - Herstellung des Polymers P9

Das oben synthetisierte Oligomer wird auf 160°C abgekühlt, bevor 159,6 g TMSA (0,83 mol) zugegeben werden. Die Temperatur wird auf 230°C erhöht, und es wird unter diesen Bedingungen weiterkondensiert, bis das Polymer eine SZ von 44 bis 49 mg KOH/g aufweist. Das aus der Polymerisation entstehende Wasser kann am Ende der Reaktion durch schwaches Vakuum gezogen werden, um die erwünschte SZ zu erreichen. Man erhält einen linearen, wasserverdünnbaren Polyester P9, dessen SZ 49 mg KOH/g beträgt. P9 weist eine Glasüberganstemperatur Tg von 60°C und eine Schmelzviskosität η₁ von 10,7 Pa*s bei 160°C auf. Die GPC-Analyse liefert folgende Werte: Mₙ= 1200 g/mol; D = 2,4 (siehe Tabelle 3).

### Beurteilung der Hydrolysenbeständigkeit von P9

Eine 20 %-ige wässrige kolloidale Lösung von P9 wird hergestellt, auf pH 8 mit N,N-Dimethylethanolamin gebracht und bei 45°C gelagert. Das Zeitintervall bis die kolloidale Lösung ausfällt wird als Maß für die Hydrolysenbeständigkeit des Polyesters genommen (siehe Tabelle 4).

### Polyester P10 und P11

Es wird wie bei der Herstellung von P9 verfahren, mit der in Tabelle 3 zusammengefassten Zusammensetzung. Die Kenndaten der Polyester P10 und P11 sind in der Tabelle 3 aufgelistet.
- P9: Vergleichsbeispiel 9
- P10: Vergleichsbeispiel 10
- P11: Vergleichsbeispiel 11

**Tabelle 3**

| | Zusammensetzung | | | | | Polyesterkenndaten | | | | |
|---|---|---|---|---|---|---|---|---|---|---|
| Polyester | MPPD [g] | CHMPD [g] | NPG [g] | IPS [g] | TMSA [g] | SZ [mg KOH/g] | Mn [g/mol] | D | Tg [°C] | η₁ [Pa.s] |
| P9 | 220,7 | 0 | 311,1 | 413,8 | 159,6 | 49 | 1200 | 2,4 | 60 | 10,7 |
| P10 | 0 | 123,4 | 167,6 | 223,0 | 86,0 | 48 | 1172 | 2,3 | 60 | 8,3 |
| P11 | 0 | 0 | 490,4 | 451,6 | 174,1 | 47 | 1250 | 2,3 | 51 | 3,7 |

**Tabelle 4**

| Polyester | Zeit bis Ausfallen der wässrigen Lösung (Tage) |
|---|---|
| P9 | > 60 Tage |
| P10 | > 60 Tage |
| P11 | 14 Tage |

### Herstellung Pulverlacke

Als Referenzbindemittel (REF) wird das Polyesterharz Uralac P-862 (T_{g} 58,0°C, SZ 35 mg KOH/g) von DSM Resins B.V. benutzt. Zur Herstellung der Pulverlacke PL1 bis PL5 und PLR werden entsprechend 570,0 g Pulverpolyester P1 bis P5 oder REF jeweils mit 30,0 g kommerziellem Härter Primid® XL-552 (Hydroxylalkylamid der Fa. EMS), 300,0 g Titandioxidpigment Kronos® 2160 (Fa. Kronos), 9,0 g Verlaufmittel Resiflow® PV5 (Fa. Worlée Chemie GmbH) und 2,5 g Benzoin in einem Labor-Universalmischer (Fa. MIT Mischtechnik GmbH) vermischt, geschmolzen und anschließend in einem Doppelschnecken-Extruder (MP 19, Fa. APV) bei 80 - 100°C extrudiert. Das erhaltene Extrudat wird dann grob gebrochen, gemahlen und gesiebt. Die so erhaltenen Pulverlacke PL1 bis PL5 und PLR werden folgenden Prüfungen unterzogen:

| Prüfparameter | Prüfmethode |
|---|---|
| Fliesseigenschaften | Fluidisierbarkeit DIN ISO 8130-5 |
| Gelzeit | DIN IS08130-6 |

Anschließend werden die Pulverlacke auf Stahlprüfbleche (Q-Panel R-36) elektrostatisch appliziert und bei 160°C 10 min. lang eingebrannt. Dabei werden Schichtdicken von 60 µm bis 80 µm angestrebt. Die resultierenden Beschichtungen werden folgenden Prüfungen unterzogen:

| Prüfparameter | Prüfmethode |
|---|---|
| Glanz | DIN EN ISO 2813 |
| Schlagzähigkeit | EN ISO 6272 |
| Schlagempfindlichkeit | ASTM D 2794 |
| Elastizität | EN ISO 1520 |
| Wetterstabilität | Schnellbewitterungsprüfung (QUV-A) DIN EN ISO 11507 |

Die Ergebnisse der Lackprüfungen sind in der Tabelle 5 zusammengefasst.

**Tabelle 5**

| | Prüfparameter | Prüfverfahren | PL1 | PL2 | PL3 | PL4 | PL5 | PLR |
|---|---|---|---|---|---|---|---|---|
| Pulverlack | Fliesseigenschaften | Fluidisierbarkeit | 171, 8 | 150, 5 | 157, 4 | 147, 0 | 160, 5 | 124, 6 |
| | Gelzeit | Gelzeit @ 180°C [s] | 126 | 127 | 136 | 150 | 131 | 173 |
| Prüfbleche | Glanz | Glanzmessung bei 20° | 66 | 82 | 86 | 80 | 79 | 63 |
| | Schlagzähigkeit | Impact [kg*cm] | 200 | 200 | 200 | 170 | 160 | 200 |
| | Schlagempfindlichkeit | Reverse Impact [kg*cm] | 30 | 70 | 70 | 10 | 20 | 200 |
| | Elastizität | Erichsentiefung [mm] | 8,4 | 10,2 | 10,4 | 10,3 | 10,0 | 10,6 |
| | Wetterstabilität | Restglanz nach 1000 h QUV-A [%] | 92,0 | 99,0 | 96,0 | 93,7 | 58,0 | 93 |

Die erfindungsgemäßen Pulverlacke PL1, PL2 und PL4 haben sehr gute mechanische Eigenschaften und eine hohe UV-Beständigkeit.

### Herstellung festkörperreicher 1 Komponent-Lacke (1 K)

Zur Herstellung der festkörperreichen 1 K-Lacke 1 K-PL6, 1 K-PL7 und 1 K-PL8 werden entsprechend 70%-ige Lösungen der Polyester P6, P7 und P8 in Butylacetat hergestellt. 80 g der 70%-igen Polyesterlösungen werden jeweils mit 14 g kommerziellem Härter Luwipal® 066 (Melaminkondensat der Fa. BASF), 4 g n-Butanol, und 2 g Katalysator p-Toluolsulfonsäure vermischt. Die resultierenden Lösungen (nFA 70%) werden auf Glasplatten und Stahlprüfbleche mit Hilfe von Kastenrakel appliziert. Dabei werden Schichtdicken von 40 µm bis 50 µm angestrebt. Im Anschluss werden die beschichteten Prüfbleche bei 140°C 30 Min. lang eingebrannt. Den resultierenden Beschichtungen werden folgende Prüfungen unterzogen:

| | Prüfparameter | Prüfmethode |
|---|---|---|
| Glasplatten | Erscheinungsbild | visuelle Beurteilung der Oberflächen |
| | Glanz | DIN EN ISO 2813 |
| | Schlagempfindlichkeit | DIN 53157 |
| Stahlprüfbleche | Schlagempfindlichkeit | DIN 53157 |
| | Elastizität | DIN 53156 |
| | Hydrolysenbeständigkeit | Daimler-Chrysler-Test PBODCC371 |
| | Chemikalienbeständigkeit | Daimler-Chrysler-Test PBODCC371 |

Die Ergebnisse der Lackprüfungen sind in der Tabelle 6 zusammengefasst. 1 K-PL6 und 1 K-PL7 sind erfindungsgemäß, 1 K-PL8 gilt als Vergleichsbeispiel.

**Tabelle 6**

| | Prüfparameter | Prüfverfahren | 1K-PL6 | 1K-PL7 | 1K-PL8 |
|---|---|---|---|---|---|
| Glasplatten | Erscheinungsbild | Visuelle Beurteilung | klar | klar | klar |
| | Glanz | Glanzmessung bei 20° | 173 | 173 | 175 |
| | Schlagempfindlichkeit | Pendeldämpfung (König) [Sekunden] | 249 | 250 | 232 |
| | | Pendeldämpfung [Ausschläge] | 178 | 179 | 166 |
| Stahlprüfbleche | Schlagempfindlichkeit | Pendeldämpfung (König) [Sekunden] | 226 | 256 | 227 |
| | | Pendeldämpfung [Ausschläge] | 159 | 183 | 164 |
| | Elastizität | Erichsentiefung [mm] | 8,5 | 8,8 | 8,3 |
| | Hydrolysenbeständigkeit | Tₘₐₓ [°C] - dest. Wasser | 68 | 71 | 78 |
| | Chemikalienbeständigkeit | Tₘₐₓ [°C] - Pancreatin in Wasser (50%) | 41 | 42 | 60 |
| | | Tₘₐₓ [°C] - Schwefelsäure (1%) | 41 | 42 | 39 |
| | | Tₘₐₓ [°C] - Natronlauge (1%) | 56 | 51 | 53 |

Die erfindungsgemäßen festkörperreichen Lacke 1 K-PL6 und 1 K-PL7 zeigen ein sehr gutes Eigenschaftsprofil. Insbesondere zeigt CHMPD einen Vorteil gegenüber NPG bei den mechanischen Eigenschaften auf beiden Substraten Glas und Stahl.

### Herstellung festkörperreicher 2 Komponenten-Lacke (2K)

Zur Herstellung der festkörperreichen 2K-Lacke 2K-PL6, 2K-PL7 und 2K-PL8 werden entsprechend 70%-ige Lösungen der Polyester P6, P7 und P8 in Butylacetat hergestellt. 70 g der 70%-igen Polyesterlösungen werden jeweils mit 1 g Lösung (10%-ig in Butylacetat) des Verlaufmittels Baysilon® OL17 (Polyether der Fa. Borchers GmbH), 1 g Katalysator Dibutylzinndilaurat-Lösung (5%-ig in Butylacetat), 3 g Methoxypropylacetat, 20 g kommerziellem Härter Basonat® HI 190 BS (90%-ig, Polyisocyanat der Fa. BASF) und 5 g Butylacetat vermischt. Die resultierenden Lösungen (nFA 67%) werden auf Glasplatten und Stahlprüfbleche mit Hilfe von Kastenrakel appliziert. Dabei werden Schichtdicken von 40 µm bis 50 µm angestrebt. Im Anschluss werden die beschichteten Prüfbleche bei 80°C 30 Min. lang eingebrannt. Den resultierenden Beschichtungen werden folgende Prüfungen unterzogen:

| | Prüfparameter | Prüfmethode |
|---|---|---|
| Glasplatten | Erscheinungsbild | visuelle Beurteilung der Oberflächen |
| | Glanz | DIN EN ISO 2813 |
| | Schlagempfindlichkeit | DIN 53157 |
| Stahlprüfbleche | Schlagempfindlichkeit | DIN 53157 |
| | Elastizität | DIN 53156 |
| | Hydrolysenbeständigkeit | Daimler-Chrysler-Test PBODCC371 |
| | Chemikalienbeständigkeit | Daimler-Chrysler-Test PBODCC371 |

Die Ergebnisse der Lackprüfungen sind in der Tabelle 7 zusammengefasst. 2K-PL6 und 2K-PL7 sind erfindungsgemäß, 2K-PL8 gilt als Vergleichsbeispiel.

**Tabelle 7**

| | Prüfparameter | Prüfverfahren | 2K-PL6 | 2K-PL7 | 2K-PL8 |
|---|---|---|---|---|---|
| Glasplatten | Erscheinungspild | Visuelle Beurteilung | klar | klar | klar |
| | Glanz | Glanzmessung bei 20° | 168 | 171 | 166 |
| | Schlagempfindlichkeit | Pendeldämpfung (König) [Sekunden] | 196 | 206 | 186 |
| | | Pendeldämpfung [Ausschläge] | 140 | 157 | 134 |
| Stahlprüfbleche | Schlagempfindlichkeit | Pendeldämpfung (König) [Sekunden] | 186 | 203 | 186 |
| | | Pendeldämpfung [Ausschläge] | 133 | 145 | 133 |
| | Elastizität | Erichsentiefung [mm] | 9,8 | 10,0 | 10,3 |
| | Hydrolysenbeständigkeit | Tₘₐₓ [°C] - dest. Wasser | 61 | 61 | 55 |
| | Chemikalienbeständigkeit | Tₘₐₓ [°C] - Pancreatin in Wasser (50%) | 39 | 39 | 39 |
| | | Tₘₐₓ [°C] - Schwefelsäure (1%) | 54 | 55 | 50 |
| | | Tₘₐₓ [°C] - Natronlauge (1%) | 51 | 53 | 52 |

Die erfindungsgemäßen festkörperreichen Lacke 2K-PL6 und 2K-PL7 sind deutlich weniger schlagempfindlich als der Lack 2K-PL8 auf Basis von nur NPG, und weisen eine hohe Glanz und hohe Hydrolysenbeständigkeit auf.

## Patentansprüche

1. Polyester, erhältlich durch Umsetzung trifunktioneller Alkohole mit Dicarbonsäuren oder Polycarbonsäuren als Aufbaukomponenten und monomeren Verbindungen, **dadurch gekennzeichnet, dass** als monomere Verbindung
substituierte 2-Aryl-2-alkyl-1,3-propandiole der Formel I oder substituierte 2-Cyclohexyl-2-alkyl-1,3-propandiole der Formel la 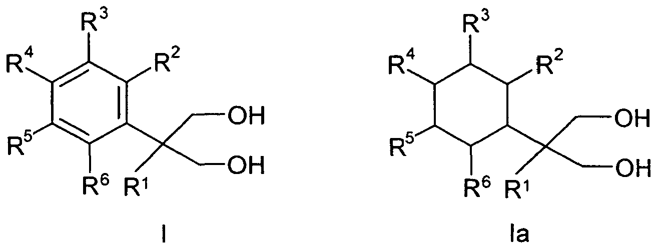 oder die alkoxylierten Derivate der Verbindungen der Formel I und Ia eingesetzt werden, wobei
R¹ eine lineare oder verzweigte Alkylgruppe mit 1 bis 10 C-Atomen darstellt und R² bis R⁶ unabhängig voneinander ausgewählt sind aus der Gruppe von Wasserstoff, Methyl-, Ethly-, Propyl-, iso-Propyl-, n-Butyl-, tert. Butyl-.

2. Polyester gemäß Anspruch 1, **dadurch gekennzeichnet, dass** der trifunktionelle Alkohol ausgewählt ist aus der Gruppe von Glycerin, Trimethylolpropan, Butantriol und Trimethylolethan.

3. Polyester gemäß Anspruch 1 oder 2, **dadurch gekennzeichnet, dass** als monomere Verbindung oder dessen alkoxylierte Derivate der Formel I oder der Formel Ia solche eingesetzt werden, bei denen R¹ lineare Alkylgruppen mit 1 bis 4 C-Atomen darstellt und R² bis R⁶ Wasserstoff ist.

4. Polyester gemäß einem der Ansprüche 1 bis 3, **dadurch gekennzeichnet, dass** die Verbindungen der Formel I oder der Formel Ia durch Umsetzung von Aldehyden der Formel 11 oder der Formel IIa 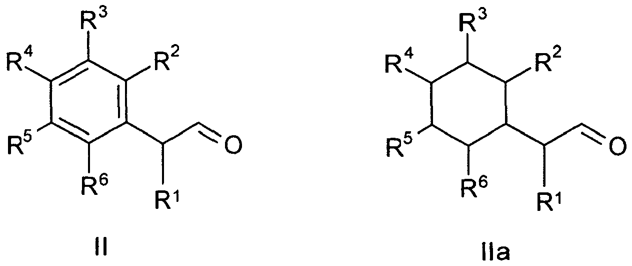
wobei R¹ und R² bis R⁶ die vorhergehende Bedeutung haben mit Formaldehyd in einer Aldol-Cannizzaro-Reaktion oder in einer Aldolkondensation mit anschließender Hydrierung erhältlich sind.

5. Polyester gemäß einem der Ansprüche 1 bis 3, **dadurch gekennzeichnet, dass** die Verbindungen der Formel Ia durch Hydrierung von entsprechenden, gleichsubstituierten Verbindungen der Formel I, wobei R¹ und R² bis R⁶ die vorhergehende Bedeutung haben, erhältlich sind.

6. Polyester, gemäß Anspruch 1 oder 2, **dadurch gekennzeichnet, dass** als monomere Verbindung
substituierte 2-Aryl-2-alkyl-1,3-propandiole der Formel I 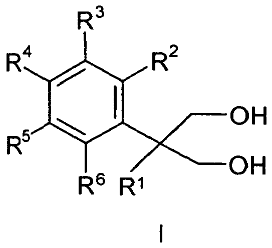 oder die alkoxylierten Derivate der Verbindungen der Formel I eingesetzt werden, wobei
R¹ eine lineare oder verzweigte Alkylgruppe mit 1 bis 10 C-Atomen darstellt und R² bis R⁶ unabhängig voneinander ausgewählt sind aus der Gruppe von Wasserstoff, Methyl-, Ethly-, Propyl-, iso-Propyl-, n-Butyl-, tert. Butyl-.

7. Verwendung des Polyesters gemäß einem der Ansprüche 1 bis 6 zur Herstellung einer thermoplastischen Zusammensetzung.

8. Thermoplastische Zusammensetzungen, enthaltend ein Polyester und/oder Wiederholungseinheiten eines Polyesters gemäß einem der Ansprüche 1 bis 6.

9. Thermoplastische Zusammensetzung nach Anspruch 8, wobei die thermoplastische Zusammensetzung noch einen Vernetzer enthält.

10. Verwendung des Polyesters nach einem der Ansprüche 1 bis 6 zur Herstellung von Beschichtungsmassen, Dichtungsmassen oder Klebstoffen.

11. Beschichtungsmassen, Dichtungsmassen oder Klebstoffe, enthaltend Wiederholungseinheiten eines Polyesters nach einem der Ansprüche 1 bis 6.

12. Verwendung des Polyesters gemäß einem der Ansprüche 1 bis 6 zur Herstellung von Pulverlacken.

13. Pulverlack, enthaltend Wiederholungseinheiten eines Polyesters nach einem der Ansprüche 1 bis 6.

## Claims

1. A polyester obtainable by reacting trifunctional alcohols with dicarboxylic acids or polycarboxylic acids as structural components and monomeric compounds, wherein use is made as monomeric compound of
substituted 2-aryl-2-alkyl-1,3-propanediols of the formula I or substituted 2-cyclohexyl-2-alkyl-1,3-propanediols of the formula Ia 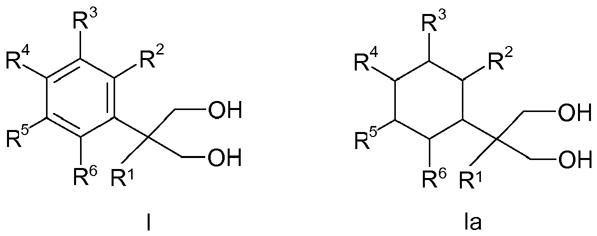
or the alkoxylated derivatives of the compounds of the formulae I and Ia, where R¹ is a linear or branched alkyl group having 1 to 10 C atoms and R² to R⁶ independently of one another are selected from the group consisting of hydrogen, methyl-, ethyl-, propyl-, isopropyl-, n-butyl-, and tert-butyl-.

2. The polyester according to claim 1, wherein the trifunctional alcohol is selected from the group consisting of glycerol, trimethylolpropane, butanetriol, and trimethylolethane.

3. The polyester according to claim 1 or 2, wherein use is made as monomeric compound or its alkoxylated derivatives of the formula I or of the formula Ia of those for which R¹ is linear alkyl groups having 1 to 4 C atoms and R² to R⁶ is hydrogen.

4. The polyester according to any of claims 1 to 3, wherein the compounds of the formula I or of the formula Ia are obtainable by reacting aldehydes of the formula II or of the formula IIa 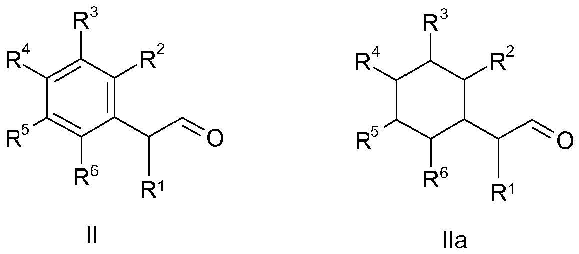
where R¹ and R² to R⁶ have the preceding definitions with formaldehyde in an aldol-Cannizzaro reaction or in an aldol condensation with subsequent hydrogenation.

5. The polyester according to any of claims 1 to 3, wherein the compounds of the formula Ia are obtainable by hydrogenating corresponding, identically substituted compounds of the formula I, with R¹ and R² to R⁶ having the preceding definition.

6. The polyester according to claim 1 or 2, wherein use is made as monomeric compound of
substituted 2-aryl-2-alkyl-1,3-propanediols of the formula I 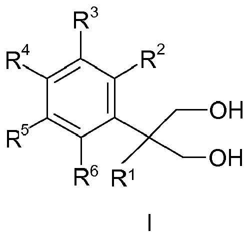 or the alkoxylated derivatives of the compounds of the formula I, where
R¹ is a linear or branched alkyl group having 1 to 10 C atoms and
R² to R⁶ independently of one another are selected from the group consisting of hydrogen, methyl-, ethyl-, propyl-, isopropyl-, n-butyl-, and tert-butyl-.

7. The use of the polyester according to any of claims 1 to 6 for preparing a thermoplastic composition.

8. A thermoplastic composition comprising a polyester and/or repeat units of a polyester according to any of claims 1 to 6.

9. The thermoplastic composition according to claim 8, the thermoplastic composition further comprising a crosslinker.

10. The use of the polyester according to any of claims 1 to 6 for producing a coating material, sealant or adhesive.

11. A coating material, sealant or adhesive comprising repeat units of a polyester according to any of claims 1 to 6.

12. The use of the polyester according to any of claims 1 to 6 for producing a powder coating material.

13. A powder coating material comprising repeat units of a polyester according to any of claims 1 to 6.

## Revendications

1. Polyester, pouvant être obtenu par transformation d'alcools trifonctionnels avec des acides dicarboxyliques ou polycarboxyliques comme composants constitutifs et des composés monomères, **caractérisé en ce qu'**on utilise, comme composé monomère, des 2-aryl-2-alkyl-1,3-propanediols substitués de formule I ou des 2-cyclohexyl-2-alkyl1,3-propanediols substitués de formule Ia 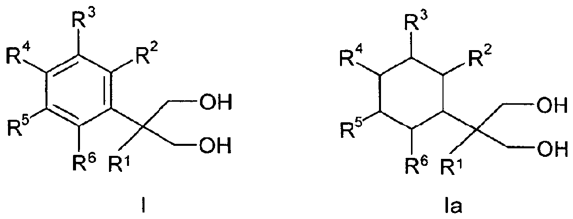 ou les dérivés alcoxylés des composés de formules I et Ia, où
R¹ représente un groupe alkyle linéaire ou ramifié comprenant 1 à 10 atomes de carbone et
R² à R⁶ sont choisis, indépendamment les uns des autres, dans le groupe formé par hydrogène, méthyle, éthyle, propyle, iso-propyle, n-butyle, tert-butyle.

2. Polyester selon la revendication 1, **caractérisé en ce que** l'alcool trifonctionnel est choisi dans le groupe formé par le glycérol, le triméthylolpropane, le butanetriol et le triméthyloléthane.

3. Polyester selon la revendication 1 ou 2, **caractérisé en ce qu'**on utilise comme composé monomère ou ses dérivés alcoxylés de formule I ou de formule Ia des dérivés dans lesquels R¹ représente des groupes alkyle linéaires comprenant 1 à 4 atomes de carbone et R² à R⁶ représentent hydrogène.

4. Polyester selon l'une quelconque des revendications 1 à 3, **caractérisé en ce que** les composés de formule I ou de formule Ia peuvent être obtenus par transformation d'aldéhydes de formule II ou de formule IIa 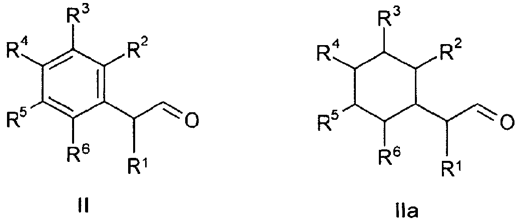
où R¹ et R² à R⁶ présentent la signification ci-dessus, avec du formaldéhyde dans une réaction aldol de Cannizzaro ou dans une condensation d'aldol, suivie d'une hydrogénation.

5. Polyester selon l'une quelconque des revendications 1 à 3, **caractérisé en ce que** les composés de formule la peuvent être obtenus par hydrogénation de composés correspondants, substitués de la même manière, de formule **I,** où R¹ et R² à R⁶ présentent la signification ci-dessus.

6. Polyester selon la revendication 1 ou 2, **caractérisé en ce qu'**on utilise, comme composé monomère, des 2-aryl-2-alkyl-1,3-propanediols substitués de formule I 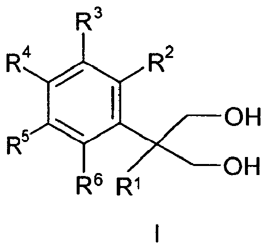 ou les dérivés alcoxylés des composés de formule I, où
R¹ représente un groupe alkyle linéaire ou ramifié comprenant 1 à 10 atomes de carbone et
R² à R⁶ sont choisis, indépendamment les uns des autres, dans le groupe formé par hydrogène, méthyle, éthyle, propyle, iso-propyle, n-butyle, tert-butyle.

7. Utilisation du polyester selon l'une quelconque des revendications 1 à 6 pour la préparation d'une composition thermoplastique.

8. Compositions thermoplastiques, contenant un polyester et/ou des unités récurrentes d'un polyester selon l'une quelconque des revendications 1 à 6.

9. Composition thermoplastique selon la revendication 8, la composition thermoplastique contenant encore un réticulant.

10. Utilisation du polyester selon l'une quelconque des revendications 1 à 6 pour la préparation de masses de revêtement, de masses d'étanchéité ou d'adhésifs.

11. Masses de revêtement, masses d'étanchéité ou adhésifs contenant des unités récurrentes d'un polyester selon l'une quelconque des revendications 1 à 6.

12. Utilisation du polyester selon l'une quelconque des revendications 1 à 6 pour la préparation de laques en poudre.

13. Laque en poudre, contenant des unités récurrentes d'un polyester selon l'une quelconque des revendications 1 à 6.
